# EUROPEAN PATENT APPLICATION

(11) **EP 4 609 900 A2**
(43) Date of publication of application: **03.09.2025**
(21) Application number: 25181477.8
(22) Date of filing: 06.08.2021
(51) Int. Cl.: A61M 15/06

(54) **A BATTERY MODULE AND AN AEROSOL GENERATING SYSTEM COMPRISING SUCH BATTERY MODULE**

(30) Priority: 10.08.2020 WO PCT/CN2020/108179
(62) Divisional of application: 21763249.6
(71) Applicant: JT International S.A., 1202 Genève (CH)
(72) Inventor: LUO, Jian Cheng, 1218 Le Grand-Saconnex (CH); SHEN, Pifa, Shenzhen, 518102 (CN); MING, Zhinan, Shenzhen, 518102 (CN); TAN, Hua, Shenzhen, 518102 (CN)
(74) Representative: Appleyard Lees IP LLP

(57) **Abstract**

The invention relates to an aerosol generating system comprising a battery module for an aerosol generating system, the battery module comprising: a battery (1) extending substantially in a longitudinal direction (Z), the battery (1) having a length (L) measured in the longitudinal direction (Z), and a width (W) and a thickness (T) measured orthogonally to the longitudinal direction, wherein the battery (1) comprises along the longitudinal direction (Z) a first portion (P1) of a first thickness (T1), and a second portion (P2) comprising opposite faces (6,7) which define a second thickness (T2) of said second portion, the second thickness (T2) being less than the first thickness (T1), wherein the second portion of the battery is provided with poles (8) configured for connection to a board-to-board connector (4); and a printed circuit board assembly (2) connected to the battery (1).

## Description

### Field of the invention

The present invention relates to a battery module for an aerosol generating system.

Aerosol generating systems allow vaporization of a product, generally a liquid, often called e-liquid or e-juice. The aerosol generating systems according to the invention are also commonly called vaporizers or electronic cigarettes.

More particularly, vaporization of the product is obtained, generally by heating, in an aerosolization module, also called atomizer. Aerosolization is the conversion of a substance, for example in liquid state or solid state, into particles small and light enough to be carried on the air.

Aerosol generating systems or e-cigarettes are thus portable devices comprising an electric heat source that heats the product (e-liquid) to create an aerosol that the user inhales, and a battery to power the heat source.

### Background of the invention

Several atomizer technologies and configurations are known for aerosol generating systems. Such atomizers are known as "cartomizer", clearomizer", etc. They all use an electric powered heating device. A battery that is embedded in a battery module provides electric power to the heating device. The battery module and the atomizer can be formed as a one-piece system, but they are generally provided as separate modules.

The battery module also includes a number of electronic components. These electronic components are used to control the aerosol generating system. They generally comprise a main printed circuit board assembly that carries a microprocessor. They also generally comprise a pressure sensor making it possible to determine when the user wishes the delivery of a puff by the system. Furthermore, the battery module comprises electric contacts for battery charging.

The battery module is usually the biggest part of the aerosol generating system. To obtain a small system, which fits in a pocket and is pleasant to use, spatial optimization of the battery module is necessary.

Some aerosol generating system configurations are known in the state of the art that optimize, to a certain extent, the dimensions of the system.

For example, US 2020/0000146 A1 discloses a vaporizer composed of several sub-assemblies. One of the sub-assemblies comprises a rigid tray configured to receive and retain the battery. An end cap is abutted to the battery tray. The end cap comprises the contacts for battery charging and holds the printed circuit board assembly of the system.

While such configuration results in a fine, narrow, vaporizer, it also results in a very elongated shape.

The present invention aims to optimize the spatial configuration of an aerosol generating system, and more particularly the configuration of a battery module for such a system. The invention lastly aims at providing a small, portable, aerosol-generating system having a battery capacity sufficient for a convenient use.

### Summary of the invention

The present invention thus relates to a battery module for an aerosol generating system. The battery module comprises a battery extending substantially in a longitudinal direction, the battery having a length measured in the longitudinal direction, and a width and a thickness measured orthogonally to the longitudinal direction. The battery module comprises a printed circuit board assembly connected to the battery. The battery comprises along the longitudinal direction a first portion of a first thickness, and a second portion. The second portion comprises opposite faces which define a second thickness of said second portion, the second thickness being less than the first thickness. The printed circuit board assembly is electrically connected to the second portion of the battery, on one of said opposite faces.

A battery having portions of different thicknesses allows several spatial optimizations of the battery module. In particular it allows optimization of the thickness of the battery module, in that other components of the system can be superimposed on the second portion having the smallest thickness, without increasing (or increasing less) the total thickness of the system, which can typically be determined by the portion of greatest thickness. This also allows, in some cases, a space optimization in the longitudinal direction. Indeed, the volume, which is freed in the thickness direction thanks to the thickness reduction of the second portion of the battery, can be used to accommodate a thin element (e.g. the printed circuit board assembly), which extends longitudinally. This avoids the addition of the length of this element to the length of the battery, which would results in a long aerosol generating system as known in the prior art. More particularly, the printed circuit board assembly is connected to the battery on the second portion of the battery, which reduce the space needed for this connexion and simplifies said connexion.

The battery module can comprise poles configured for connection to a board-to-board connector.

According to this configuration, the connexion between the printed circuit board assembly and the battery does not increase (or only slightly) the overall thickness of the system. Furthermore, such connexion can be performed in very simple manner, in particular without soldering.

A board-to-board connector is convenient and reliable to provide an electric connexion between the printed circuit board assembly and the battery.

The battery can further comprise a flexible printed circuit connected to the printed circuit board assembly and carrying the board-to-board connector that is connected to the poles of the battery.

The flexible printed circuit can further comprise electrical contacts configured for connection to a charger for charging the battery. The use of a flexible printed circuit (also called FPC) has many advantages. An FCP can accommodate many configurations of the battery module. It is an extremely flat component: it does not take up space. It is particularly suitable for carrying a board-to-board connector. In addition, it can be used to carry some components or parts for the performance of certain functions, other than a simple electrical connection. In particular, electrical charging contacts can be carried by the FPC.

The printed circuit board assembly can be at least in part situated against the opposite face of the second portion of the battery to the face where it is electrically connected.

Such a configuration is particularly advantageous. It allows a significant optimization of the volume available in the battery module (typically in a casing of the battery module), in the thickness direction, but also in the length direction because the length of the printed circuit board assembly is in whole or in part situated along the battery. On the other hand, the capacity of the battery is not significantly reduced, because the volume of the battery, compared to a battery of the same length but of constant section, is reduced only by the volume necessary for the implantation of the electronic circuit (in part or in whole) and its connection.

The second thickness of the second portion can be comprised between 10% and 70%; and preferably between 20% and 40% of the first thickness of the first portion.

The battery can comprise a single cell.

Although a single cell battery is the preferred configuration, a battery comprising several cells is not excluded from the invention. The reduction in thickness of the second portion of the battery can for example be obtained by the assembly of battery cells of different thicknesses.

The battery module can further comprise at one of its two ends in the longitudinal direction, a battery cover that holds charging contact points for connection to a charger for charging the battery. The charging contact points held by the battery cover can be, if applicable, the electrical contacts of the flexible printed circuit.

The battery cover can comprise a ferromagnetic sheet. The ferromagnetic sheet can be of cold rolled steel.

The battery cover thus makes it possible to mechanically close an end of the battery module system, and also makes it possible to offer support for the electric contacts provided to charge the battery.

In some embodiments, it allows both electrical and mechanical connections to a battery charger which includes magnetic holding means. The use of a ferromagnetic sheet (i.e. a thin plate) ensures the holding function with respect to magnets embedded in the charger. A ferromagnetic sheet takes up much less space in the battery module than magnets would.

The battery module can comprise successively in the longitudinal direction : the printed circuit board assembly, the first portion of the battery, and a pressure transducer, the printed circuit board assembly been connected to the pressure transducer by a second flexible printed circuit.

The invention also relates to an aerosol generating system comprising a battery module as above described and an aerosolization module removably connected to the battery module.

Such a system thus presents a significant optimization in the use of the available volumes in the longitudinal direction. This provides a highly nomadic character and ease of use to the system.

The invention also relates to a set comprising an aerosol generating system and a battery charger, the aerosol generating system comprising a battery module as above described. The battery charger can comprise at least one magnet configured to attract and retain the ferromagnetic sheet when the end surface of the battery module comprising the battery cover is placed against a surface of the battery charger.

### Brief description of the drawings

Other particularities and advantages of the invention will also emerge from the following description.

In the accompanying drawings, given by way of non-limiting examples:
- Figure 1 represents, in a side view, the main parts of a battery module according to an embodiment of the invention;
- Figure 2 represents, in an exploded view, a battery module according to an embodiment of the invention comprising the parts represented in Figure 1;
- Figure 3 represents, in a schematic three dimensional view, an aerosol generating system comprising the battery module of Figure 2;
- Figure 4a and Figure 4b are schematic diagrams of an aspect of some embodiments of the invention.

### Detailed Description

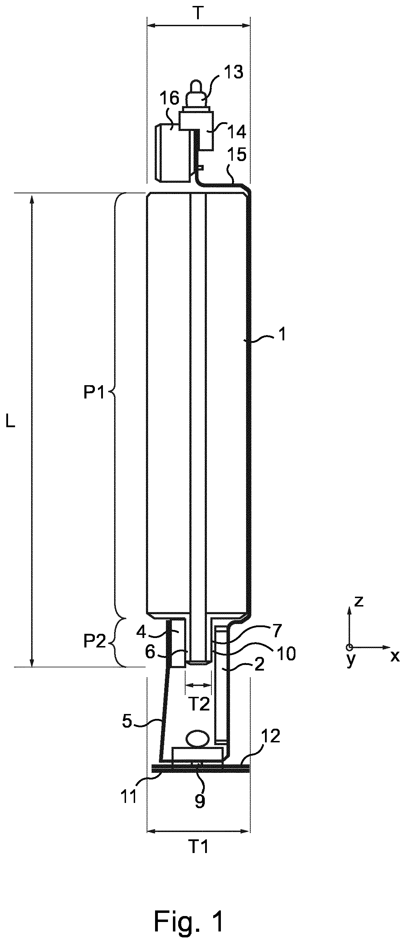

Figure 1 represents the main parts of a battery module according to an embodiment of the invention.

The battery module comprise a battery 1. The battery can be of various technologies, including Lithium-Ion (Li-ion) and Lithium-polymer (Li-Po).The battery 1 generally comprises a single cell, but can alternatively comprise several cells in serial and/or in parallel arrangements. A 300mah to 500mha one cell Li-Po or Li-ion battery can advantageously be used. Such a battery is small and light, and allows more than 200 puffs. The battery 1 comprises, in the represented example, a plastic covering. The plastic covering of the battery can be made for example of a thin moulded or thermoformed plastic, or of a plastic sheath (which may or may not be heat shrinkable).

The battery 1 has an elongated shape, and extends in a longitudinal direction Z. In the represented example, the battery has a prismatic shape, and more particularly a generally parallelepiped shape with rounded longitudinal edges. The length L of the battery corresponds to its dimension in the longitudinal direction. It is also the greatest dimension of the battery.

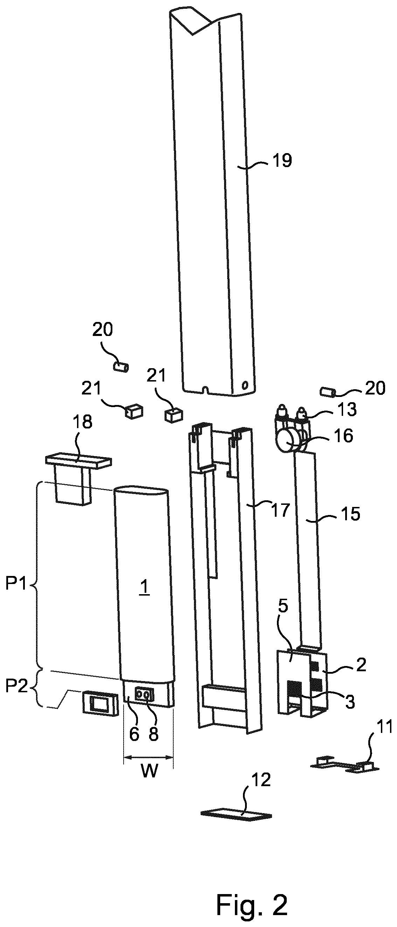

The battery has also a width W (visible in Figure 2) and a thickness. T.

The width W and the thickness T are measured orthogonally to the longitudinal direction, and in mutually orthogonal directions (respectively defined as width direction Y and thickness direction X). The width W corresponds to the second greatest dimension of the battery. The thickness T is the third dimension of the battery, as above defined.

In the represented example embodiment, the width of the battery is substantially constant.

According to the invention, the battery comprises at least two portions, in the longitudinal direction Z. A first portion P1 of the battery 1 has a first thickness T1 (which is, in this embodiment, substantially constant). A second portion P2 of the battery 1 has a second thickness T2 (which is, in this embodiment, substantially constant). The second thickness T2 is less than the first thicknessT1. Advantageously, the second portion of the battery 1 participate in the storage of energy. In other words, the second portion P2 advantageously comprises a part of the electrolytic mixture of the battery.

The battery module further comprises a printed circuit board assembly 2. The printed circuit board assembly 2 comprises a microprocessor 3 (visible in Figure 2) and other electronic components. The printed circuit board assembly 2 is configured to control the main functions of the battery module and more generally of the aerosol generating system.

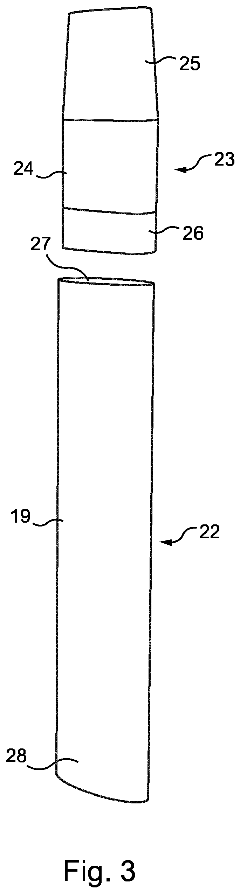

For example, the printed circuit board assembly 2 can control battery parameters such as the state of charge and/or the temperature of the battery 1. The printed circuit board assembly 2 can control the heating device of an atomizer module, when such atomizer module is connected to the battery module to form an aerosol generating system as hereafter described with reference to Figure 3. The printed circuit board assembly 2 can more particularly control the ignition of the heating device, based on information provided by a pressure sensor arranged to detect suction performed by the user on the vaporizer.

The printed circuit board assembly 2 is electrically connected to the second portion of the battery. This connection is performed on the second portion P2 of the battery 1. The space freed by the thickness reduction of the battery in its second portion P2 is advantageously used to accommodate this connexion.

A board-to-board connector 4 is used for this connexion. More particularly, a flexible printed circuit 5 is used to connect the printed circuit board assembly 2 to the battery 1.Said a flexible printed circuit 5 comprises a board-to-board connector 4 situated, in the represented embodiment, at one of its ends.

In the represented embodiment of the invention, the second portion P2 of the battery has a first face 6 and a second face 7. The first face 6 and the second face 7 are substantially parallel. The second thickness T2, i.e. the thickness of the second portion P2, corresponds to the distance between the first face 6 and the second face 7.

As shown in Figure 2, one of the faces (e.g. the first face 6) of the second portion P2 of the battery 1 is provided with electric poles 8 that are configured to match for connexion with the board-to-board connector 4.

The printed circuit board assembly 2 is at least in part situated against the opposite face of the second portion (e.g. the second face 7) to the face where the poles 8 are situated. The printed circuit board assembly 2 can be bonded to the second portion P2 of the battery 1. For example, a double-sided adhesive 10, for example a double-sided adhesive foam, can be interposed between a face of the second portion P2 of the battery 1 and the printed circuit board assembly 2. The printed circuit board assembly 2 being a thin part, it can be placed in the space freed by the thickness reduction of the battery in its second portion P2, without extending beyond the thickness of the first portion P1.

Such configuration is advantageous, notably in that it provides a convenient place for fastening the printed circuit board assembly 2. The overall thickness of the battery module is not increased by the printed circuit board assembly 2, and the overall length of the battery module is not increased by the total length of the printed circuit board assembly 2.

The difference between the thickness of the first portion P1 and the thickness of the second portion P2 can thus be determined based on the required thickness to accommodate the board-to-board connector 4 and the printed circuit board assembly 2.

For example, the thickness difference between the first portion P1 and the second portion P2 (i.e. T1 minus T2) can be comprised between 1mm and 20mm, preferably between 3mm and 20mm and more preferably between 5mm and 10mm.

For example, the thickness of the second portion is comprised between 10% and 70%; and preferably between 20% and 40% of the thickness of the first portion.

The flexible printed circuit 5 also comprises electrical contacts 9. The electrical contacts 9 are configured for connection to a charger for charging the battery.

To hold the electrical contacts 9 in place, a battery cover 11 is provided. The battery cover 11 is fastened, e.g. by snap fitting or clipping, at the bottom end of the battery module. A decorative plate 12 is fasten to the battery cover 11. The decorative plate 11 forms the bottom surface of the battery module, as well as the bottom surface of the aerosol generating system once this system is formed.

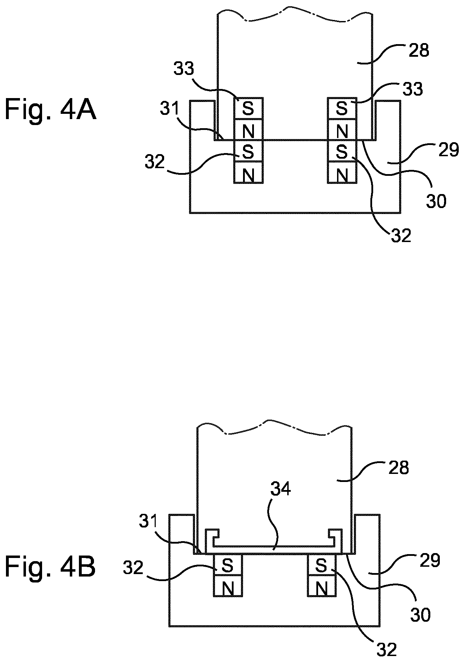

The cover can comprise (e.g. be formed of) a ferromagnetic sheet, such as a cold rolled steel sheet. This aspect of the invention is explained hereafter with reference to Figure 4a and Figure 4b.

The battery module comprises plugs 13 at its upper end, i.e. its opposite end to the bottom end where the battery cover 11 and the electrical contacts 9 for charging the battery 1 are arranged. The plugs 13 are configured to connect the battery module to an aerosolization module.

The plugs 13 can be spring pin connectors, usually called "pogo pins^{™}". A spring pin connector is usually made up of two sliding cylinders constrained against each other by an internal spring.

The plugs 13 are carried by a rigid plug holder 14.

The plugs 13 are connected to the printed circuit board assembly 2 by a flexible printed circuit. This flexible printed circuit can be, according to alternative embodiments, a second flexible printed circuit 15 or the continuation of the flexible printed circuit 5.

The flexible printed circuit that connects the printed circuit board assembly to the plugs 13 can also carry a pressure transducer 16. The pressure transducer 16 is configured to detect a suction performed by the user on the aerosol generating system.

In the optimized configuration of a battery module represented in Figures 1 and 2, the following parts are thus successively arranged, from the bottom to the upper end of the battery module: the printed circuit board assembly 2, the first portion P1 of the battery 1, and the pressure transducer 16.

Figure 2 represents, in addition to the main parts of the battery module represented in Figure 1, other constitutive parts of this embodiment of a battery module. The battery 1 is arranged in a battery holder 17. The battery holder 17 is an open rigid structure, such as a frame, which can receive the battery 1 and protect it mechanically. It also forms a support for the other parts of the battery module.

A pressure transducer holder 18 is also provided. The pressure transducer holder 18 is configured to receive and hold the pressure transducer 16. The pressure transducer holder 18 can also form the top surface of the battery module. It can have holes through which the plugs 13 protrude. A battery tube 19 that forms the external casing of the battery module is provided. The battery tube 19 is a sheath in which all the other elements of the battery module are inserted and held in place. The battery holder 17 is held in place in the battery tube by holding pins 20.

Magnets 21 are positioned near the top of the battery module.

Figure 3 represents, an aerosol generating system comprising the battery module of Figure 2.

The aerosol generating system comprises a battery module 22 and an aerosolization module 23. The aerosolization module comprises an atomizer or a cartomizer. More particularly, the aerosolization module comprises a reservoir 24, a heating device, a cap 25, and a base 26 configured to mate with the plugs 13 of the battery module 22. The cap 25 can form a mouthpiece, i.e. the piece where the user places his mouth to vape.

The aerosolization module can be a consumable item. It can also be designated by the term "cartridge". Once the vaporizable product initially contained in the reservoir is consumed, and the reservoir is empty, the aerosolization module is replaced by another aerosolization module with a full reservoir. The old module can be discarded, preferably for recycling. A change of aerosolization module can also be carried out, even before the reservoir is empty, in order to change the product to be vaped. This allows for example the user to choose the taste of the product which he consumes.

The battery tube 19 has an upper cavity 27 in which the base 26 and the reservoir 24 are received. The base 16 then comes to bear on the pressure transducer holder and the plugs 13 are plugged into corresponding sockets of the base 26. The magnets 21 interact with magnets contained in the base 26 to ensure magnetic retention of the aerosolization module 23 on the battery module 22.

Figure 4a and 4b represent, according to a schematic diagram, an aspect of some embodiments of the invention. Figure 4a and Figure 4b represent the bottom end 28 of a battery module. This bottom end 28 may be inserted into a charger 29. The charger can be supplied with electricity by a suitable transformer or by a USB (Universal Serial Bus) socket. The bottom end surface 30 of the battery module 23 comprising the battery cover is placed against a surface 31 of the battery charger 29. This also places the electrical contacts 9 of the battery module in contact with corresponding electric contacts of the charger.

Magnetic means allow the battery module 22 (or more generally the aerosol generating system) to be held on the charger 29.

According to the embodiment of Figure 4a, charger magnets 32 are embedded in the charger 29. Bottom end magnets 33 are also embedded in the bottom end 28 of the battery module 22 and have opposite polarity, such that the charger magnets 32 attract the bottom end magnets 33 and *vice versa.*

According to the optimized embodiment of Figure 4b, the bottom end magnets 33 are replaced by a ferromagnetic sheet 34. The ferromagnetic sheet 34 can be fastened to or formed by the battery cover 11. The ferromagnetic sheet 34 is attracted by the charger magnets 32 when the bottom end surface 30 is placed against the surface 31 of the charger 29. This saves longitudinal space, compared to the embodiment of figure 4a.

The battery module developed in the invention, which comprises a battery having portions of different thicknesses, allows spatial optimization of the battery module. It allows in particular optimization of the thickness and of the length of the battery module.

The volume available in a small, for example prismatic or tube-shaped casing is used as much as possible to arrange elements constituting the battery module, compactly fitting together.

The invention helps in the design of a small, appealing, and convenient vaporizer.

### Clauses:

1. A battery module for an aerosol generating system, the battery module comprising:
   - a battery (1) extending substantially in a longitudinal direction (Z), the battery (1) having a length (L) measured in the longitudinal direction (Z), and a width (W) and a thickness (T) measured orthogonally to the longitudinal direction,
   - a printed circuit board assembly (2) connected to the battery (1);
      wherein,
      the battery (1) comprises along the longitudinal direction (Z) a first portion (P1) of a first thickness (T1), and a second portion (P2) comprising opposite faces (6,7) which define a second thickness (T2) of said second portion, the second thickness (T2) being less than the first thickness (T1),
      and wherein the printed circuit board assembly (2) is electrically connected to the second portion (P2) of the battery (1) on one of said opposite faces (6,7).
2. A battery module according to Clause 1, wherein the battery module comprises poles (8) configured for connection to a board-to-board connector (4).
3. A battery module according to Clause 2, wherein it further comprises a flexible printed circuit (5) connected to the printed circuit board assembly (2) and carrying the board-to-board connector (4) that is connected to the poles (8) of the battery (1).
4. A battery module according to Clause 3, wherein the flexible printed circuit (5) further comprises electrical contacts (9) configured for connection to a charger (29) for charging the battery (1).
5. A battery module according to any one of Clauses 1 to 4, wherein the printed circuit board assembly (2) is at least in part situated against the opposite face of the second portion of the battery to the face where it is electrically connected.
6. A battery module according to any one of the preceding clauses wherein the second thickness (T2) of the second portion (P2) is comprised between 10% and 70%; and preferably between 20% and 40% of the first thickness (T1) of the first portion (P1).
7. A battery module according to any one of the preceding clauses wherein the battery (1) comprises a single cell.
8. A battery module according to any one of the preceding clauses comprising two ends in the longitudinal direction (Z), wherein it further comprises, at one of said two ends, a battery cover (11) which holds charging contact points for connection to a charger for charging the battery (1).
9. A battery module according to Clauses 4 and 8, wherein the charging contact points held by the battery cover are the electrical contacts (9) of the flexible printed circuit (5).
10. A battery module according to Clause 8 or Clause 9, wherein the battery cover (11) comprises a ferromagnetic sheet 34.
11. A battery module according to Clause 10, wherein the ferromagnetic sheet (34) is of cold rolled steel.
12. A battery module according to any one of the preceding clauses, comprising successively in the longitudinal direction : the printed circuit board assembly (2), the first portion (P1) of the battery (1), and a pressure transducer (16), the printed circuit board assembly (2) been connected to the pressure transducer (16) by a second flexible printed circuit (15).
13. An aerosol generating system comprising a battery module (22) according to any one of the preceding clauses and an aerosolization module (23) removably connected to the battery module (22).
14. A set comprising an aerosol generating system and a battery charger, the aerosol generating system comprising a battery module according to Clause 10 or Clause 11, wherein the battery charger (29) comprises at least one magnet (32) configured to attract and retain the ferromagnetic sheet (34) when the end surface of the battery module comprising the battery cover (11) is placed against a surface of the battery charger.

## Claims

1. An aerosol generating system comprising a battery module for an aerosol generating system, the battery module comprising:
a battery (1) extending substantially in a longitudinal direction (Z), the battery (1) having a length (L) measured in the longitudinal direction (Z), and a width (W) and a thickness (T) measured orthogonally to the longitudinal direction, wherein the battery (1) comprises along the longitudinal direction (Z) a first portion (P1) of a first thickness (T1), and a second portion (P2) comprising opposite faces (6,7) which define a second thickness (T2) of said second portion, the second thickness (T2) being less than the first thickness (T1), wherein the second portion of the battery is provided with poles (8) configured for connection to a board-to-board connector (4); and
a printed circuit board assembly (2) connected to the battery (1).

2. The aerosol generating system of claim 1, wherein the printed circuit board assembly is connected to the battery on the second portion of the battery.

3. The aerosol generating system of claim 1 or 2, wherein the printed circuit board assembly is electrically connected to the battery.

4. The aerosol generating system of any preceding claim, wherein the battery comprises cells in a parallel arrangement.

5. The aerosol generating system of any preceding claim, wherein the battery comprises a parallelepiped shape with rounded longitudinal edges.

6. The aerosol generating system of any preceding claim, wherein the printed circuit board assembly is at least in part situated against the opposite face of the second portion of the battery to the face where it is connected.

7. The aerosol generating system of any preceding claim, wherein the thickness difference between the first portion and the second portion comprises between 1mm and 20mm.

8. The aerosol generating system of any preceding claim, wherein the battery is arranged in a battery holder (17), wherein the battery holder is an open rigid structure.

9. The aerosol generating system according to claim 8, wherein the open rigid structure is a frame.

10. The aerosol generating system of any preceding claim, wherein the battery module comprises a flexible printed circuit extending from an upper end of the battery module to a bottom end of the battery module.

11. The aerosol generating system of claim 10, wherein the flexible printed circuit board comprises electrical contacts configured for connection to a charger for charging the battery.

12. The aerosol generating system of any preceding claim, wherein the bottom end of the battery module is electrically connectable to a charger.

13. The aerosol generating system of claim 12, wherein the bottom end of the battery module is electrically connectable to a Universal Serial Bus charger.

14. The aerosol generation system of any preceding claim, wherein the battery comprises a plastic covering, wherein, optionally, the plastic covering comprises a thermoformed plastic or a plastic sheath.

15. The aerosol generating system of any preceding claim, comprising magnets (21) positioned near the top of the battery module.
